# EUROPÄISCHE PATENTSCHRIFT

(11) **EP 4 177 413 B1**
(45) Veröffentlichungstag und Bekanntmachung des Hinweises auf die Patenterteilung: **08.07.2026**
(21) Anmeldenummer: 22204329.1
(22) Anmeldetag: 28.10.2022
(51) Int. Cl.: E04D 13/08, F16L 3/10

(54) **ABDECKELEMENT FÜR EINE ROHRSCHELLE UND SYSTEM ZUR DACHENTWÄSSERUNG VON GEBÄUDEN**
COVERING ELEMENT FOR A PIPE CLIP AND SYSTEM FOR ROOF DRAINAGE OF BUILDINGS
ÉLÉMENT DE RECOUVREMENT POUR UN COLLIER DE SERRAGE ET SYSTÈME DE DRAINAGE DE TOIT DE BÂTIMENTS

(30) Priorität: 04.11.2021 DE 202021106049 U
(43) Veröffentlichungstag der Anmeldung: 10.05.2023
(60) Teilanmeldung: 26181834.8
(73) Patentinhaber: Lemp GmbH & Co. KG, 47441 Moers (DE)
(72) Erfinder: LUTTER, Ulrich, 57392 Schmallenberg (DE); DRENDEL, Ralf, 47229 Duisburg (DE); ANGERER, Martin, 66130 Saarbrücken (DE); REIMANN, Jörg, 42929 Wermelskirchen (DE)
(74) Vertreter: Brinkmann & Partner

(56) Entgegenhaltungen:
- EP-A1- 0 897 079
- EP-A1- 2 072 874
- WO-A2-2008/002129
- JP-A- 2000 192 624
- JP-A- 2007 063 801

## Beschreibung

Die Erfindung betrifft ein System zur Dachentwässerung von Gebäuden, bestehend aus zumindest einer Rinne und einem Fallrohr, wobei das Fallrohr mit einer Rohrschelle am Gebäude befestigbar ist, wobei die Rohrschelle als im Wesentlichen ringförmiges oder polygonales, insbesondere rechteckiges Element mit einer im Querschnitt polygonalen Ringschiene ausgebildet ist und die Ringschiene eine Außenfläche und sich zwei daran anschließende Seitenflächen sowie eine Anlagefläche aufweist, wobei ein Abdeckelement derart mit der Ringschiene verbunden ist, dass zumindest die Außenfläche der Ringschiene vollständig und die Seitenflächen der Ringschiene zumindest teilweise abgedeckt sind und dass das Abdeckelement hinsichtlich des Materials, der Struktur und/oder der Farbgestaltung an eine äußere Gestaltung des Fallrohrs und/oder der Rinne angepasst ist oder mit diesem bzw. dieser übereinstimmt.

Aus dem Stand der Technik ist es bekannt, dass Gebäudedächer zur Entwässerung von Niederschlagswasser mit Systemen ausgerüstet sind, die aus einer Rinne und zumindest einem Fallrohr bestehen, wobei das Fallrohr an die Rinne angeschlossen und mit Rohrschellen an der Gebäudeaußenfläche befestigt ist. Es sind auch Systeme bekannt, bei denen lediglich Fallrohre zur Entwässerung von Flachdächern vorgesehen sind. In diesem Fall wird das abzuführende Wasser beispielsweise in Rinnen gesammelt, die in die Dachfläche integriert sind.

Das Wasser wird über das Fallrohr einer Kanalisation oder aber auch einem Auffangbecken zugeführt. Die Befestigung der Rinnen im Dachbereich erfolgt mit Rinnenhaltern, während das Fallrohr mit Rohrschellen an der Gebäudeaußenwand befestigt ist. In Abhängigkeit der Gebäudehöhe sind eine Vielzahl von Rohrschellen notwendig, die in der Gebäudeaußenwand beispielsweise mit jeweils einer Schraube oder einem Einschlagstift verankert sind. In Abhängigkeit der Länge der Rinnen können auch mehrere Fallrohre mit einer Rinne in Verbindung stehen.

Jede Rohrschelle dient dazu, das Fallrohr passend zu dessen Kontur mechanisch in Position zu halten, wobei es hier auf den richtigen Abstand zur Gebäudewand ankommt, so dass ein gerader Verlauf des Fallrohres sichergestellt ist, der sowohl technisch als auch optisch von Vorteil ist. Die Rohrschellen werden aus Werkstoffen mit hoher Tragfähigkeit hergestellt. Ist die Tragfähigkeit der Werkstoffe eingeschränkt, so werden Werkstoffe mit großen Wandstärken verwendet, um die Tragfähigkeit zu gewährleisten. Rohrschellen werden häufig aus kostengünstigem Stahlblech hergestellt und weisen in Umfangsrichtung Versteifungssicken auf, die der notwendigen mechanischen Stabilität dienen. Verwendet wird oftmals dünnwandiges Stahlblech, welches im Außenbereich des Gebäudes Witterungseinflüssen ausgesetzt ist und somit zu Korrosion oder sonstigen farblichen Veränderungen neigt.

Darüber hinaus werden auch die Rinnen und Fallrohre aus einem entsprechenden Material hergestellt. Die Bestandteile des Systems sind aber unterschiedlichen Witterungseinflüssen ausgesetzt, da beispielsweise die Fallrohre und auch die Rohrschellen oftmals unter einem Dachüberstand angeordnet und somit geschützter sind, als die Rinnen im Traufenbereich eines Daches. Hieraus ergeben sich unterschiedliche Alterungseffekte der Oberflächen mit starken optischen Abweichungen. Dies gilt insbesondere auch dann, wenn unterschiedliche Materialien verwendet werden, woraus ein unterschiedliches und damit insbesondere auch ein optisch nachteiliges Korrosionsverhalten resultieren kann.

Aus der DE 20 2014 000 265 U1 ist eine Rohrschelle für die Anordnung eines Fallrohres an ein Gebäude bekannt. Diese Rohrschelle weist einen Wandmontageabschnitt zur Anbringung der Rohrschelle an der Wand sowie zwei mit dem Wandmontageabschnitt monolithisch einstückig zusammenhängenden und von dem Wandmontageabschnitt abstehende bogenförmige Klemmschenkel auf, die zusammen mit dem Wandmontageabschnitt einen C-förmigen Umgriff für das zu befestigende Rohr mit einem Umschlingungswinkel von mehr als 180° bilden und zur Aufnahme des Rohres in die Rohrschelle unter Vergrößerung des Abstandes zwischen ihren vom Wandmontageabschnitt entfernten Enden elastisch nachgiebig auseinanderspreizbar sind. Ein bogenförmiger Schließbügel zur Überbrückung des Abstandes zwischen den vom Wandmontageabschnitt entfernten Enden der Klemmschenkel ist vorgesehen, wobei die Klemmschenkel an ihren vom Wandmontageabschnitt zu den davon entfernten Klemmschenkelenden verlaufenden Außenrändern zum Rohrschelleninneren hin abgekantet sind, so dass sie eine im Querschnitt U-förmige Aufnahme bilden. In der Rohrschelle innenseitig ist ein ringsegmentförmig gebogenes, bandförmiges Andruckelement aus einem gummiartigen oder elastomeren Material aufgenommen oder einlegbar, so dass es über die Abkantungen hinweg rohrschelleninnenseitig absteht.

Diese vorbekannte Rohrschelle ist in an sich bekannter Ausgestaltung ausgebildet und weist ergänzend Andruckelemente auf, die zwischen Rohrschelle und Fallrohr zum Schutz der Außenfläche des Fallrohres angeordnet sind. Diese Andruckelemente können des Weiteren als Schalldämmelemente dienen, so dass die Übertragung des Schalls vom Fallrohr auf die Rohrschelle und umgekehrt verringert ist. Auch dienen die Andruckelemente zum Toleranzausgleich zwischen Rohr und Rohrschelle.

Aus der JP 2007 063801 A sind verschiedene Ausführungsformen von Abdeckelementen bekannt, die auf Ringschienen von Rohrschellen zur Befestigung eines Fallrohres an einem Gebäude vorgesehen sind. Die Abdeckelemente fassen ein Umfassungselement mit freien Enden auf. An den freien Enden können ergänzend Verschlusselemente angeordnet sein, mit den die freien Enden nach der Montage des Abdeckelements an der der Rohrschelle miteinander verbunden werden. Für die Montage der Abdeckelemente nach diesem Stand der Technik ist eine hohe Elastizität des Materials des Abdeckelements erforderlich. Demnach können diese Abdeckelemente in der Regel nur mit einer dünnen Wandstärke ausgebildet sein. Verstärkungselemente, wie Sicken können nicht vorgesehen werden, insoweit hierdurch die für die Montage erforderliche Biegbarkeit der Abdeckelement eingeschränkt werden kann, so dass die Abdeckelemente nur mit großem Kraftaufwand montiert werden können und im Übrigen auch eine große Gefahr der Verbiegung und/oder Beschädigung droht, die eine bestimmungsgemäße Montage erschwert. Hierdurch kann eine nicht vollständige Abdeckung der Ringschiene verursacht werden, so dass die Ringschiene aber auch die Abdeckelemente Witterungseinflüssen ausgesetzt sind. Insbesondere kann eine hohe Feuchtigkeit zwischen der Ringschiene und dem Abdeckelement zu Korrosion führen, die sowohl die dauerhafte Festigkeit aber auch das äußere Erscheinungsbild des Abdeckelements negativ beeinflusst.

Ausgehend von diesem Stand der Technik liegt der Erfindung die **Aufgabe** zugrunde, ein gattungsgemäßes System derart weiterzubilden, dass die Rohrschelle in einfacher Weise gegen Witterungseinflüsse geschützt und gleichzeitig optisch an das Gebäude bzw. andere Gebäudebestandteile, wie Fallrohr, Rinne oder dgl. angepasst werden kann.

Zur **Lösung** der Aufgabenstellung ist bei einem erfindungsgemäßen System vorgesehen, dass das Abdeckelement zweiteilig ausgebildet ist. In Verbindung mit einem Abdeckelement, das derart mit der Ringschiene verbunden ist, dass zumindest die Außenfläche der Ringschiene vollständig und die Seitenflächen der Ringschiene zumindest teilweise abgedeckt sind und dass das Abdeckelement hinsichtlich des Materials, der Struktur und/oder der Farbgestaltung an eine äußere Gestaltung des Fallrohres und/oder der Rinne angepasst ist oder mit diesen bzw. dieser übereinstimmt wird der Vorteil der vereinfachten Montage erzielt und gleichzeitig können korrosionsbedingte Beschädigungen vermindert werden.

Das System sieht vor, dass die Ringschiene aus zwei Teilen ausgebildet ist, die an jeweils einem Ende über ein Gelenk miteinander verbunden sind und an deren jeweils zweiten Enden ein Flansch mit einer Bohrung zur Aufnahme eines Verbinders, beispielsweise eines Schraubbolzens angeordnet ist, wobei sich das Abdeckelement auch über den Flansch erstreckt und das Gelenk außenseitig abdeckt. Die zweiteilige Ausgestaltung mit dem Gelenk hat den Vorteil, dass die Rohrschelle in einfacher Weise mit dem Fallrohr verbindbar ist. In einem ersten Schritt wird im Übrigen die mit dem Abdeckelement versehene Rohrschelle an der Gebäudeaußenwand befestigt. Hierzu wird eine Schrauben-Dübel-Kombination verwendet, wobei ein Dübel in eine zuvor in die Hauswand eingebrachte Bohrung eingesetzt und anschließend die Schraube in die Bohrung eingeschraubt wird, wobei die Schraube eine korrespondierende Öffnung in der Ringschiene durchgreift. Alternativ kann auch ein Einschlagstift Verwendung finden. Nachdem die Rohrschelle fest mit dem Gebäude verbunden ist wird das Fallrohr in die geöffnete Ringschiene eingesetzt und anschließend die Ringschiene geschlossen und mittels des Verbinders im Bereich der Flansche wird die Ringschiene am Fallrohr gesichert. Alternativ kann in einfacher Weise das Abdeckelement nach der Montage des Fallrohres aufgesteckt werden.

Eine vereinfache Montage wird erfindungsgemäß dadurch erzielt, dass auch das Abdeckelement zweiteilig ausgebildet ist, so dass es in einfacher Weise nach einer Befestigung der Rohrschelle am Gebäude aufgesetzt werden kann.

Abdeckelement und Ringschiene sind vorzugsweise form- und/oder reibschlüssig miteinander verbunden. Eine formschlüssige Verbindung wird beispielsweise dadurch erzielt, dass das Abdeckelement im Querschnitt U-förmig ausgebildet ist, wobei ein Aufnahmeraum zwischen zwei Schenkeln und einem die Schenkel verbindenden Steg ausgebildet ist, der der Aufnahme der Ringschiene dient. Ist dieser Aufnahmeraum geringfügig kleiner, als die Außendimension der Ringschiene, so kann das Abdeckelement klemmend aufgesetzt werden, woraus sich eine ergänzend reibschlüssige Verbindung ergibt. Das Abdeckelement ist somit vorzugsweise im Querschnitt U-förmig ausgebildet und übergreift die Ringschiene klemmend.

Nach einem weiteren Merkmal der Erfindung ist vorgesehen, dass die Ringschiene eine Sicke und das Abdeckelement eine die Sicke aufnehmenden Aufnahmebereich aufweist. Die Sicke dient als Versteifungselement der Ringschiene, so dass die Ringschiene auch mit einer geringeren Materialstärke ausgebildet sein kann. Hierdurch werden die Herstellkosten der Ringschiene deutlich reduziert. Das Abdeckelement weist einen die Sicke aufnehmenden Aufnahmebereich auf. Dies kann beispielsweise derart ausgebildet sein, dass auch das Abdeckelement eine entsprechende Sicke zeigt. Es besteht aber auch die Möglichkeit, dass der Aufnahmebereich als Nut in dem Abdeckelement ausgebildet ist, wobei die Nut vorzugsweise eine Querschnittsform aufweist, die mit der Außenkontur der Sicke übereinstimmt, so dass die Sicke möglichst spielfrei in der Nut angeordnet ist.

Ergänzend kann das Abdeckelement Sicken zur Aussteifung aufweisen. Diese Sicken können beispielsweise im Bereich des Übergangs aus dem das Ringelement abdeckenden Bereich in den Flanschbereich angeordnet seien, so dass hier die Gefahr des Abbrechens des den Flanschbereich überdeckenden Bereichs des Abdeckelements reduziert ist. Dies ist insbesondere von Vorteil, wenn das Abdeckelement aus Kunststoff ausgebildet ist und klemmend auf die Ringschiene aufzusetzen ist, wobei auch eine klemmende Montage auf einem Flansch vorgesehen ist.

Weitere Merkmale und Vorteile der Erfindung ergeben sich aus der nachfolgenden Beschreibung der zugehörigen Zeichnung. In der Zeichnung zeigen
Fig. 1 ein Gebäude mit einem erfindungsgemäßen System;
Fig.2 eine Rohrschelle des Systems gemäß Fig. 1 in perspektivischer Ansicht;
Fig. 3 ein Abdeckelement des Systems in perspektivischer Ansicht;
Fig. 4 das Abdeckelement gemäß Fig. 3 in einer weiteren perspektivischen Ansicht;
Fig. 5 die Rohrschelle und das Abdeckelement in einer Seitenansicht;
Fig. 6 die Rohrschelle und das Abdeckelement gemäß Fig. 5 in einer perspektivischen Ansicht;
Fig. 7 die Rohrschelle und das Abdeckelement gemäß den Figuren 5 und 6 in einer weiteren perspektivischen Ansicht;
Fig. 8 die Rohrschelle und das Abdeckelement gemäß den Figuren 5 bis 7 in einer weiteren perspektivischen Ansicht; und
Fig. 9 das Abdeckelement gemäß den Figuren 3 bis 8 in einer aufgeklappten Stellung. Die Figuren 3 bis 9 zeigen ein einteiliges Abdeckelement 23. Diese Ausführungsformen fallen somit nicht unter den Wortlaut der Ansprüche. Sie erleichtern aber das Verständnis der Erfindung.

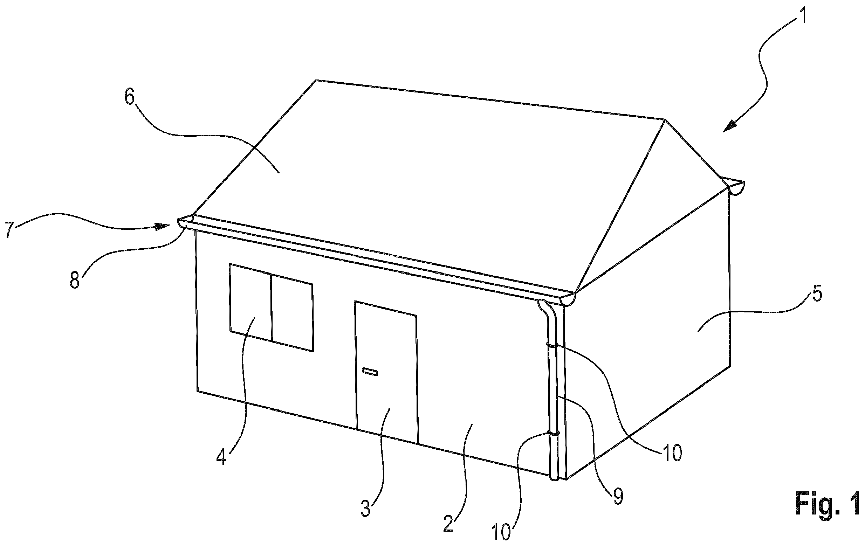

Fig. 1 zeigt ein Gebäude 1 in perspektivischer Ansicht bestehend aus einer Vorderwand 2 mit einer Tür 3 und einem Fenster 4 und einer Seitenwand 5. Nicht dargestellt sind eine Rückwand und eine zweite Seitenwand, die zusammen mit der Vorderwand 2 und der Seitenwand 5 eine Gebäudehülle bilden, auf die ein Satteldach 6 aufgesetzt ist.

Im Bereich des Übergangs vom Satteldach 6 zur Vorderwand 2 ist ein System 7 zur Dachentwässerung des Gebäudes 1 angeordnet. Das System 7 besteht aus einer Rinne 8, die sich über die gesamte Länge des Satteldachs 6 im Traufenbereich erstreckt und das vom Satteldach 6 ablaufende Niederschlagswasser aufnimmt. Die Rinne 8 ist über nicht näher dargestellte Rinnenhalter am Satteldach 6 im Traufenbereich befestigt.

In einem Eckbereich der Vorderwand 2 zur Seitenwand 5 ist ein Fallrohr 9 am Gebäude 1 befestigt, wobei das Fallrohr 9 mit seinem oberen Ende in einer komplementären Öffnung der Rinne 8 und mit seinem unteren Ende im Bodenbereich, insbesondere in einem Abwasserkanal angeordnet ist. Das Fallrohr 9 ist mit Rohrschellen 10 an der Vorderwand 2 befestigt.

Das in der Figur 1 dargestellte System 7 befindet sich in übereinstimmender Ausgestaltung auch im Traufenbereich des Satteldachs 6 auf der nicht näher dargestellten Rückseite des Gebäudes 1. Ergänzend können mehrere Fallrohre 9 an die Rinne 8 angeschlossen sein. Die Rinne 8, die im dargestellten Ausführungsbeispiel nach Fig. 1 im Querschnitt halbkreisförmig ausgebildet ist, kann auch alternative Querschnittsformen haben, wie beispielsweise eine polygonale Querschnittsform.

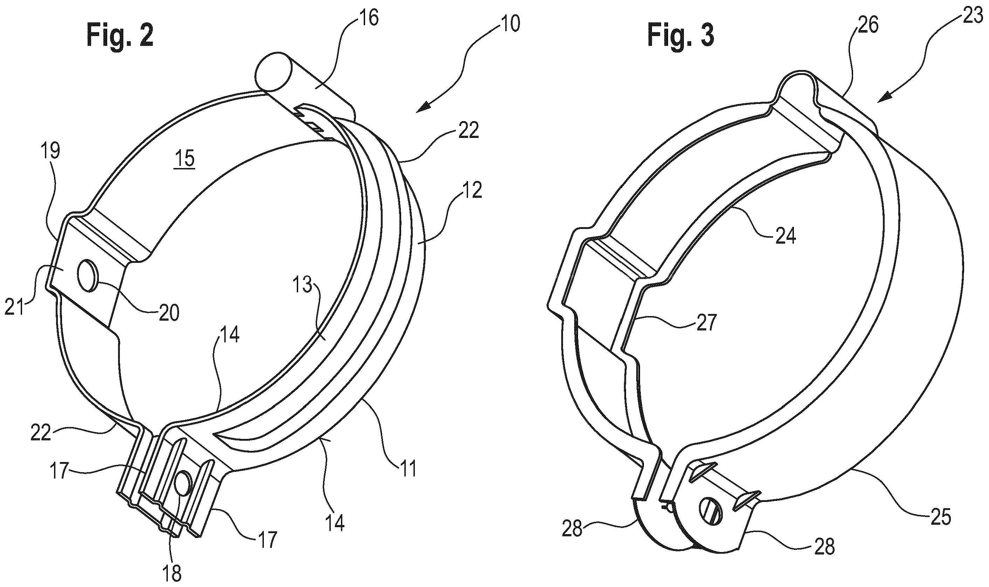

In Fig. 2 ist eine Rohrschelle 10 in perspektivischer Ansicht dargestellt. Die Rohrschelle 10 ist als im Wesentlichen ringförmiges Element 11 ausgebildet. Das Element 11 weist eine im Querschnitt rechteckige Ringschiene 12 auf, die eine Außenfläche 13, zwei daran sich anschließende Seitenflächen 14 und eine Anlagefläche 15 aufweist. Die Ringschiene 12 ist in zwei Hälften unterteilt, die über ein Gelenk 16 verbunden sind. Jede Hälfte der Ringschiene 12 weist an ihrem dem Gelenk 16 abgewandten Ende einen Flansch 17 auf, wobei jeder Flansch 17 eine Öffnung 18 zur Aufnahme eines nicht näher dargestellten Verbindungselementes aufweist, wobei diese Öffnungen 18 koaxial zueinander ausgerichtet sind. Als Verbindungselement kann hier beispielsweise ein Schraubbolzen mit Mutter vorgesehen sein.

Ergänzend weist eine Hälfte der Ringschiene 12 eine im Querschnitt U-förmige Abbiegung 19 auf, die wiederum eine Öffnung 20 zur Aufnahme eines Befestigungselementes, beispielsweise einer in einen nicht näher dargestellten Dübel einzuschraubenden Schraube hat. Die Abbiegung 19 weist eine Anlagefläche 21 auf, die der Anlage an der Vorderwand 2 des Gebäudes dient. Die durch die Öffnung 20 greifende Schraube dient der Befestigung der Rohrschelle 10 am Gebäude 1, so dass das in die Rohrschelle 10 aufgenommene Fallrohr 9 lagegenau am Gebäude 1 fixiert ist. Eine weitere Ausgestaltung sieht vor, dass an der Rohrschelle 10 in diesem Bereich ein Gewinde, beispielsweise einer eingesetzten Mutter, angeordnet ist, welches mit einer Gewindestange, beispielsweise einer Schraube zusammenwirkt. Hierüber kann auch die Distanz zur Wand eingestellt werden.

Ergänzend ist aus Fig. 2 zu erkennen, dass beide Hälften der Ringschiene 12 im Bereich der Außenfläche 13 eine Sicke 22 haben, die der Aussteifung der Ringschiene 12 dienen und die sich über einen wesentlichen Teil der Ringschiene 12 zwischen einem Flansch 17 und dem Gelenk 16 erstrecken.

Die Ringschiene 12 kann beispielsweise aus einem verzinkten Stahlblech ausgebildet sein.

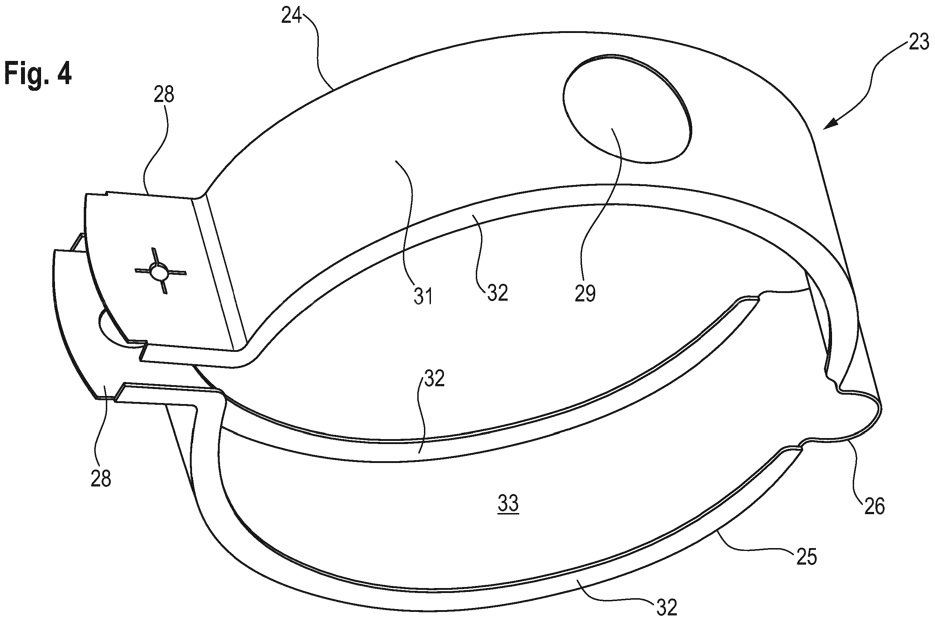

In den Figuren 3 und 4 ist ein Abdeckelement 23 dargestellt, das derart mit der Ringschiene 12 verbindbar ist, dass zumindest die Außenfläche 13 der Ringschiene 12 vollständig und die Seitenflächen 14 der Ringschiene 12 zumindest teilweise abgedeckt sind. Das Abdeckelement 23 weist zwei Abdeckhälften 24, 25 auf, die über ein elastisches Element 26 verbunden sind, wobei dieses elastische Element 26 im Querschnitt halbkreisförmig ausgebildet ist und sich über einen Außenflächenbereich des Abdeckelementes 23 nach außen erstreckt. Das elastische Element 26 ist derart ausgebildet, dass in den inneren Bereich des Elements 26 das Gelenk 16 aufgenommen werden kann.

Beide Abdeckhälften 24, 25 sind im Querschnitt U-förmig ausgebildet, wobei die Abdeckhälfte 24 gemäß Fig. 3 eine mit der Abbiegung 19 übereinstimmende Abbiegung 27 aufweist. Des Weiteren weisen beide Abdeckhälften 24, 25 an ihren freien Enden jeweils einen Flansch 28 auf. Jeder Flansch 28 ist mit einer zentrischen Öffnung zur Aufnahme des bereits voranstehend beschriebenen Verbindungselementes ausgebildet.

Im Unterschied zur Ausführungsform nach Fig. 3 weist die Ausführungsform nach Fig. 4 in der Abdeckhälfte 24 eine Bohrung 29 auf, die der Aufnahme der Schraube für die Verbindung der Rohrschelle 10 mit der Vorderwand 2 des Gebäudes 1 dient. Eine entsprechende Öffnung ist selbstverständlich auch in der Abbiegung 27 bei der Ausführungsform gemäß Fig. 3 vorgesehen.

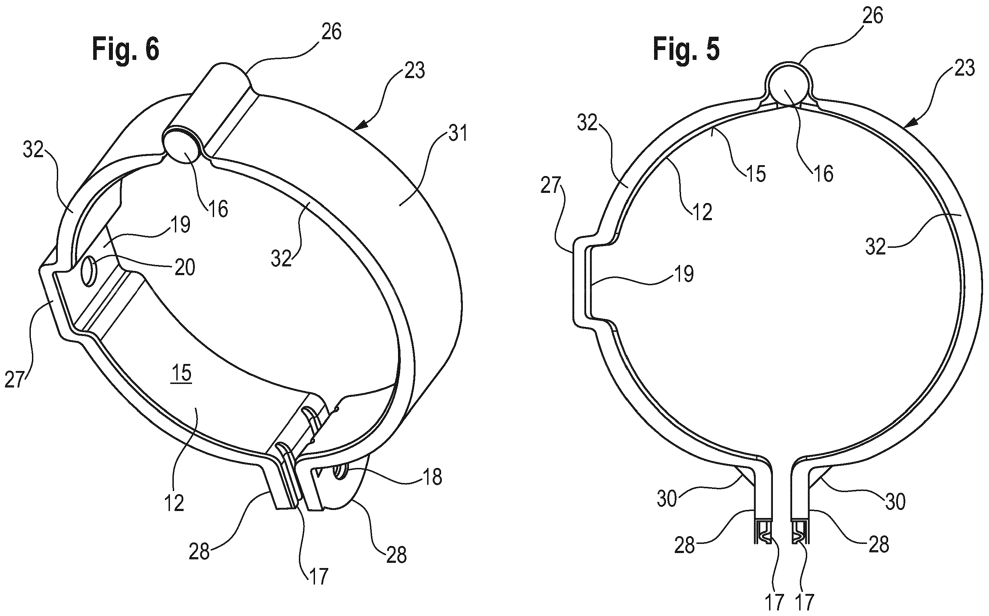

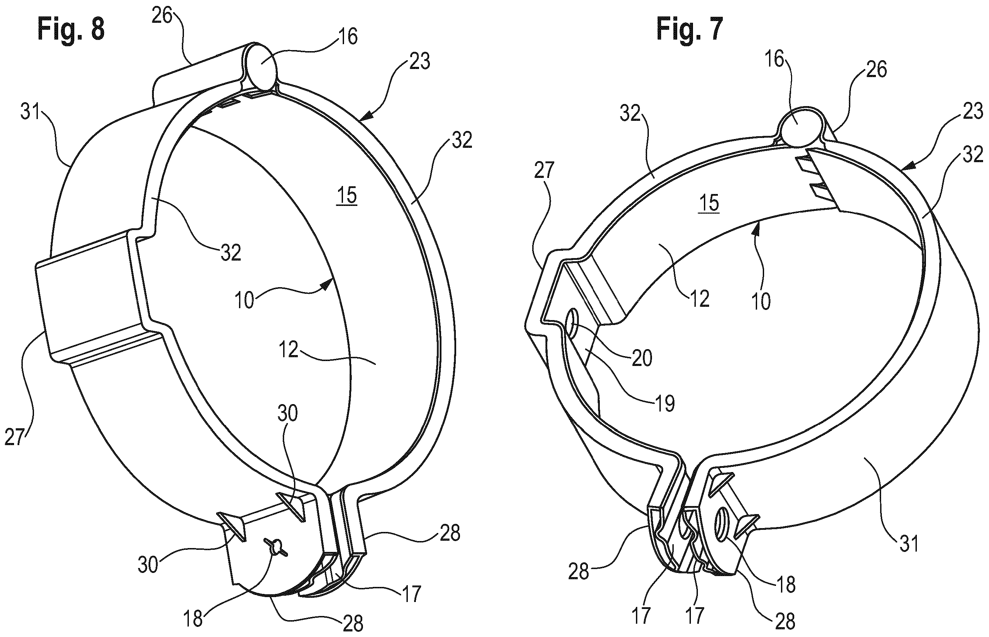

Die Figuren 5 bis 8 zeigen das Abdeckelement 23 in seiner an der Rohrschelle 10 bestimmungsgemäß vorgesehenen Montagelage in verschiedenen Ansichten. Ergänzend ist zum Beispiel in den Figuren 5 und 8 zu erkennen, dass das Abdeckelement 23 in dem Übergangsbereich von einer Abdeckhälfte 24 bzw. 25 in einen Flansch 28 Sicken 30 aufweist. Diese Sicken 30 dienen der Stabilisierung des Abdeckelements 23, welches beispielsweise aus einem Kunststoff hergestellt werden kann.

Das Abdeckelement 23 weist eine von der Rohrschelle 10 abweichende Farbgestaltung auf. Ergänzend besteht das Abdeckelement 23 aus einem vom Material der Rohrschelle 10 abweichenden Material und kann somit sowohl an eine äußere Gestaltung des Fallrohres 9 und/oder der Rinne 8 angepasst sein. Auch kann eine Anpassung an die Fassadengestaltung des Gebäudes 1 erfolgen, nämlich entweder dahingehend, dass übereinstimmende Farben gewählt werden oder dass auch Komplementärfarben oder Kontrastfarben verwendet werden, um bestimmte visuelle Effekte im Fassadenbereich zu erzielen. Neben diesen ästhetischen Funktionen weist das Abdeckelement 23 aber auch noch eine Schutzfunktion auf. Die Rohrschelle 10 wird im Außenbereich annähernd vollständig vom Abdeckelement 23 abgedeckt, so dass das Abdeckelement 23 die Rohrschelle 10 vor Umwelteinflüssen schützt und insbesondere Korrosionsschäden vermeidet oder zumindest abdeckt.

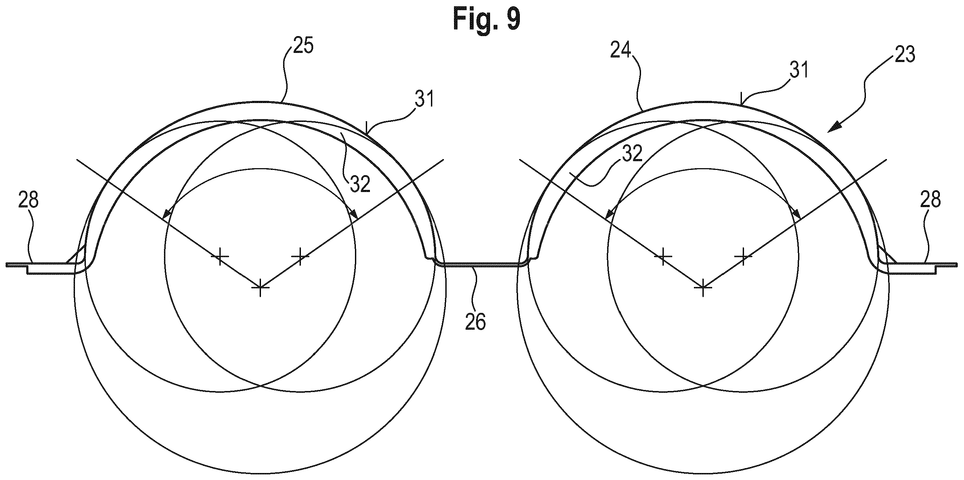

In Fig. 9 ist das Abdeckelement in einer Anordnung vor der Montage an einer Rohrschelle 10 dargestellt. Erkennbar ist, dass der flexible Bereich des Elements 26 eine Relativbewegung der beiden Abdeckhälften 24, 25 zueinander zulässt. Zu diesem Zweck weist das Abdeckelement 23 im Bereich des Elements 26 eine abweichende Querschnittsform auf. Die Querschnittsform im Bereich des Elements 26 ist polygonal, nämlich rechteckig. Durch die Ausgestaltung des Abdeckelements 23 aus einem biegeelastischen Material kann das Abdeckelement 23 aus seiner in Fig. 9 dargestellten Ausgangsstellung in einfacher Weise an die Rohrschelle 10 angepasst und anschließe3nd über das nicht näher dargestellte Verbindungselement im Bereich der Flansche 28 mit der Rohrschelle 10 verbunden werden.

Das Abdeckelement 23 übergreift die Rohrschelle 10 form- und reibschlüssig. Zu diesem Zweck weist das Abdeckelement 23 im Bereich der Abdeckhälften 24 und 25 einen flächigen Steg 31 und zwei sich daran anschließende, sich in gleiche Richtung vom Steg 31 erstreckende Schenkel 32 auf, die eine Raum 33 aufspannen, der der Aufnahme der Ringschiene 12 der Rohrschelle 10 derart dient, dass zumindest die Außenfläche 13 der Ringschiene 12 vollständig und die Seitenflächen 14 der Ringschiene 12 zumindest teilweise abgedeckt sind.

Rohrschelle 10 und Abdeckelement 27 können abweichend von der voranstehenden Beschreibung eine abweichende Form haben. Beispielsweise können die Elemente eine rechteckige, insbesondere quadratische Kontur aufweisen.

### Bezugszeichen

1. Gebäude
2. Vorderwand
3. Tür
4. Fenster
5. Seitenwand
6. Satteldach
7. System
8. Rinne
9. Fallrohr
10. Rohrschelle
11. Element
12. Ringschiene
13. Außenfläche
14. Seitenfläche
15. Anlagefläche
16. Gelenk
17. Flansch
18. Öffnung
19. Abbiegung
20. Öffnung
21. Anlagefläche
22. Sicke
23. Abdeckelement
24. Abdeckhälfte
25. Abdeckhälfte
26. Element
27. Abbiegung
28. Flansch
29. Öffnung
30. Sicke
31. Steg
32. Schenkel
33. Raum

## Patentansprüche

1. System (7) zur Dachentwässerung von Gebäuden, bestehend aus zumindest einer Rinne (8) und einem Fallrohr (9), wobei das Fallrohr mit einer Rohrschelle (10) des Systems am Gebäude befestigbar
ist, wobei die Rohrschelle als im Wesentlichen ringförmiges oder polygonales, insbesondere rechteckiges Element mit einer im Querschnitt polygonalen Ringschiene ausgebildet ist und die Ringschiene eine Außenfläche und sich zwei daran anschließende Seitenflächen sowie eine Anlagefläche aufweist, wobei ein Abdeckelement (23) des Systems derart mit der Ringschiene (12) verbunden ist, dass zumindest
die Außenfläche (13) der Ringschiene (12) vollständig und die Seitenflächen (14) der Ringschiene (12) zumindest teilweise abgedeckt sind und dass das Abdeckelement (23) hinsichtlich des Materials, der Struktur und/oder der Farbgestaltung an eine äußere Gestaltung des Fallrohrs (9) und/oder der Rinne (8) angepasst ist oder mit diesem bzw. dieser übereinstimmt, **dadurch gekennzeichnet, dass** das Abdeckelement (23) zweiteilig ausgebildet ist.

2. System nach Anspruch 1,
**dadurch gekennzeichnet,**
**dass** die Ringschiene (12) aus zwei Teilen ausgebildet ist, die an jeweils einem Ende über ein Gelenk (16) miteinander verbunden sind und an deren jeweils zweiten Enden ein Flansch (17) mit einer Bohrung (18) zur Aufnahme eines Verbinders angeordnet ist, wobei sich das Abdeckelement (23) auch über den Flansch (17) erstreckt und das Gelenk (16) außenseitig abdeckt.

3. System nach Anspruch 1 oder 2,
**dadurch gekennzeichnet,**
**dass** das Abdeckelement (23) und die Ringschiene (12) form- und/oder reibschlüssig miteinander verbunden sind.

4. System nach einem der Ansprüche 1 bis 3,
**dadurch gekennzeichnet,**
**dass** das Abdeckelement (23) im Querschnitt U-förmig ausgebildet und die Ringschiene (12) klemmend übergreifend an dem Element (11) angeordnet ist.

5. System nach einem der Ansprüche 1 bis 4,
**dadurch gekennzeichnet,**
**dass** die Ringschiene (12) eine Sicke (22) und das Abdeckelement (23) einen die Sicke (22) aufnehmenden Aufnahmebereich aufweist.

6. System nach einem der Ansprüche 1 bis 5,
**dadurch gekennzeichnet,**
**dass** das Abdeckelement (23) Sicken (30) zur Aussteifung aufweist.

## Claims

1. System (7) for roof drainage of buildings, the system at least consisting of a gutter (8) and a downpipe (9), wherein the downpipe can be fixed to the building by means of pipe clamp (10) of the system, wherein the pipe clamp is designed as a substantially annular or polygonal, in particular rectangular element with a ring rail which is polygonal in cross section and wherein the ring rail has an outer surface and two adjoining lateral surfaces as well as a contact surface, wherein a cover element (23) of the system is connected to the ring rail (12) in such a way that at least the outer surface (13) of the ring rail (12) is completely covered and the lateral surfaces (14) of the ring rail (12) are at least partially covered and that the cover material (23) is adapted to an outer shape of the down pipe (9) and/or gutter (8) or corresponds to it in terms of material, structure and/or color design,
**characterized in that**
the cover element (23) is of two-part design.

2. System according to claim 1,
**characterized in that**
the ring rail (12) is formed from two parts which are connected to each other at one end by a joint (16) and at whose second ends a flange (17) with a bore (18) for receiving a connector is arranged, wherein the cover element (23) also extends over the flange (17) and covers the joint (16) on the outside.

3. System according to claim 1 or 2,
**characterized in that**
the cover element (23) and the ring rail (12) are positively or frictionally connected to each other.

4. System according to any one of claims 1 to 3,
**characterized in that**
the cover element (23) is U-shaped in cross section and is arranged on the element (11) and overlaps the ring rail (12) in a clamping manner.

5. System according to any one of claims 1 to 4,
**characterized in that**
the ring rail (12) includes a bead (22) and the cover element (23) includes a receiving area receiving the bead (22).

6. System according to any one of claims 1 to 5,
**characterized in that**
the cover element (23) includes beads (30) for reinforcement.

## Revendications

1. Système (7) pour le drainage de toit de bâtiments, le système comprenant au moins une gouttière (8) et un tuyau de descente (9), dans lequel le tuyau de descente peut être fixé au bâtiment au moyen d'un collier de serrage (10) du système, dans lequel le collier de serrage est conçu comme un élément sensiblement annulaire ou polygonal, en particulier rectangulaire, avec un rail annulaire de section polygonale, le rail annulaire présentant une surface extérieure et deux surfaces latérales adjacentes ainsi qu'une surface de contact, un élément de recouvrement (23) du système étant relié au rail annulaire (12) de telle manière qu'au moins la surface extérieure (13) du rail annulaire (12) soit entièrement recouverte et que les surfaces latérales (14) du rail annulaire (12) sont au moins partiellement recouvertes et que le matériau de recouvrement (23) est adapté à la forme extérieure du tuyau de descente (9) et/ou de la gouttière (8) ou correspond à celle-ci en termes de matériau, de structure et/ou de couleur,
**caractérisé en ce que**
l'élément de recouvrement (23) est conçu en deux parties.

2. Système selon la revendication 1,
**caractérisé en ce que**
le rail annulaire (12) est formé de deux parties qui sont reliées entre elles à une extrémité par un joint (16) et à la deuxième extrémité desquelles est disposée une bride (17) avec un alésage (18) pour recevoir un connecteur, l'élément de recouvrement (23) s'étendant également sur la bride (17) et recouvrant le joint (16) à l'extérieur.

3. Système selon la revendication 1 ou 2,
**caractérisé en ce que**
l'élément de recouvrement (23) et le rail annulaire (12) sont reliés entre eux par complémentarité de forme ou par friction.

4. Système selon l'une quelconque des revendications 1 à 3,
**caractérisé en ce que**
l'élément de recouvrement (23) a une section transversale en forme de U et est disposé sur l'élément (11) et recouvre le rail annulaire (12) de manière à le serrer.

5. Système selon l'une quelconque des revendications 1 à 4,
**caractérisé en ce que**
le rail annulaire (12) comprend un bourrelet (22) et l'élément de recouvrement (23) comprend une zone de réception recevant le bourrelet (22).

6. Système selon l'une quelconque des revendications 1 à 5,
**caractérisé en ce que**
l'élément de recouvrement (23) comprend des bourrelets (30) pour le renforcement.
